# EUROPÄISCHE PATENTSCHRIFT

(11) **EP 1 726 482 B1**
(45) Veröffentlichungstag und Bekanntmachung des Hinweises auf die Patenterteilung: **26.03.2008**
(21) Anmeldenummer: 06010547.5
(22) Anmeldetag: 22.05.2006
(51) Int. Cl.: B60R 1/06

(54) **Spiegelanordnung, insbesondere für Nutzfahrzeuge**
Vehicle mirror apparatus, in particular for commercial vehicles
Dispositif de miroir, en particulier pour véhicules utilitaires

(30) Priorität: 23.05.2005 DE 102005023711
(43) Veröffentlichungstag der Anmeldung: 29.11.2006
(73) Patentinhaber: MEKRA Lang GmbH & Co. KG, 90765 Fürth (DE)
(72) Erfinder: Lang, Werner, Dr., 91465 Ergersheim (DE); Popp, Albrecht, 91629 Weihenzell (DE); Reimchen, Richard, 91522 Ansbach (DE)
(74) Vertreter: Winter, Brandl, Fürniss, Hübner Röss, Kaiser, Polte Partnerschaft Patent- und Rechtsanwaltskanzlei

(56) Entgegenhaltungen:
- WO-A-20/05008084
- US-A- 5 210 652
- US-A- 5 337 190
- PATENT ABSTRACTS OF JAPAN Bd. 013, Nr. 373 (M-861), 18. August 1989 (1989-08-18) & JP 01 127430 A (KOITO MFG CO LTD), 19. Mai 1989 (1989-05-19)

## Beschreibung

Die vorliegende Erfindung betrifft eine Spiegelanordnung, insbesondere für Nutzfahrzeuge, nach dem Oberbegriff des Anspruchs 1.

Fahrzeugrückspiegel, deren Tragarm sich vom Fahrzeugchassis im wesentlichen horizontal nach vorne erstreckt, wobei der eigentliche Spiegel im wesentlichen vom vorderen Ende des Tragarms vertikal nach unten hängt, sind als so genannte Hömerspiegel insbesondere bei Bussen aufgrund der besseren Aerodynamik und einfachen Fertigung sowie des vorteilhaften Sichtfeldes weit verbreitet.

Ragt dabei, wie bei so genannten Niederflurbussen, ein Teil des Tragarms und/oder Spiegels in einen Sicherheitsbereich hinein, der sich beispielsweise im wesentlichen 2m über Bodenniveau horizontal erstreckt, so muss dieser Teil aufgrund gesetzlicher Vorschriften bei einem Aufprall auf ein Hindernis zum Schutz des Spiegels sowie von Personen, die sich in diesem Sicherheitsbereich aufhalten, ausweichen können.

Die EP 0 895 897 B1 schlägt hierzu einen Tragarm vor, mit dem ein Spiegel mittels eines Gelenks derart verbunden ist, dass er um eine horizontale Schwenkachse quer zu Fahrtrichtung aus einer Betriebsstellung, in der der Spiegel sich zumindest teilweise innerhalb dieses Sicherheitsbereichs befindet, in eine Ausweichstellung oberhalb dieses Sicherheitsbereichs verschwenken kann.

Da der Spiegel sowohl bei einer Kollision in Vorwärts- als auch in Rückwärtsfahrtrichtung ausschwenken können muss, um Personen, die sich im Sicherheitsbereich aufhalten, beispielsweise beim Anfahren einer Bushaltestelle ebenso wie beim Rückwärtsrangieren des Busses im Falle einer Kollision vor schweren Schäden zu schützen, ist es erforderlich, dass das Gelenk in der EP 0 895 897 B1 ein Verschwenken in beide Drehrichtungen gestattet. Gleichermaßen muss der Spiegel jedoch während des normalen Fahrbetriebs auch bei dabei auftretenden Erschütterungen sicher in seiner Betriebsstellung fixiert sein und dabei insbesondere den angreifenden Windkräften widerstehen. Die EP 0 895 897 B1 schlägt hierzu insbesondere Friktions- oder Rastgelenke vor.

Nachteilig sind solche Gelenke, die ein Verschwenken in beide Drehrichtungen bei gleichzeitiger stabiler Fixierung einer Grundstellung ermöglichen, aufwendig.

Aus der US 5 337 190 A ist eine Spiegelanordnung bekannt, die einen Tragarm und einen Spiegelkopf sowie zwei diese verbindenden Drehgelenke umfasst, wobei das erste Drehgelenk ein Verschwenken eines Spiegelkopfes um seine Drehachse nur in einer ersten Drehrichtung gestattet, und das zweite Drehgelenk ein Verschwenken des Spiegelkopfes um seine Drehachse nur in einer zweiten, der ersten Drehrichtung entgegengesetzten, Drehrichtung gestattet. Allerdings ergibt sich hierbei ein sehr komplexer Aufbau.

Ausgehenden von der US 5 337 190 A ist es Aufgabe der vorliegenden Erfindung, eine stabile Fixierung eines Fahrzeugspiegels in einer Betriebsstellung und gleichzeitig ein Verschwenken um eine Drehachse in beide Drehrichtungen bei einem einfachen Aufbau zu ermöglichen.

Die Lösung dieser Aufgabe erfolgt durch die Merkmale des Anspruch 1.

Eine erfindungsgemäße Spiegelanordnung umfasst einen Tragarm und einen Spiegelkopf sowie zwei diese verbindenden Drehgelenke, wobei das erste Drehgelenk ein Verschwenken eines Spiegelkopfes um seine Drehachse nur in einer ersten Drehrichtung gestattet, und das zweite Drehgelenk ein Verschwenken des Spiegelkopfes um seine Drehachse nur in einer zweiten, der ersten Drehrichtung entgegengesetzten, Drehrichtung gestattet.

Vorteilhaft muss hier jedes Drehgelenk nur ein Verschwenken in eine Richtung ermöglichen. Dadurch können beide Drehgelenke konstruktiv deutlich einfacher ausgebildet sein.

Das erste und/oder zweite Drehgelenk umfassen einen Anschlag, der eine Drehung in die erste bzw. zweite Drehrichtung begrenzt. Ein solcher Anschlag kann beispielsweise mechanisch, insbesondere formschlüssig erfolgen. Der Anschlag ist durch das jeweils andere Drehgelenk ausgebildet. Die dabei resultierenden großen Hebelarme gewährleisten bereits mit relativ kleinen Abstützkräften ausreichend hohe Widerstandsdrehmomente und verhindern so effektiv ein Verschwenken entgegen der zulässigen Drehrichtung. Durch eine Begrenzung der Drehbewegung in nur eine Drehrichtung ist es vorteilhaft möglich, den Spiegelkopf sicher in einer Betriebsstellung zu fixieren, da in dieser beide

Drehgelenke in der jeweils gesperrten Richtung beliebig hohe Kräfte aufnehmen können.

Das erste und/oder zweite Drehgelenk kann eine Drehfeder umfassen. Diese ermöglicht auf konstruktiv einfache und kostengünstige Weise ein Verschwenken in die zulässige Drehrichtung und fixiert andererseits den Spiegelkopf sicher in seiner Betriebsstellung. Zudem lässt sie den Spiegelkopf nach einer Ausweichbewegung sicher in seine Betriebsstellung zurückkehren.

In einer besonders bevorzugten Ausführung ist im ersten und/oder zweiten Drehgelenk bei einem Verschwenken des Spiegelkopfes um die Drehachse des jeweils anderen Drehgelenks die Verbindung zwischen Spiegelkopf und Tragarm lösbar. So verhindert beispielsweise die Drehachse des ersten Drehgelenks ein weiteres Verschwenken um die Drehachse des zweiten Drehgelenks entgegen der zweiten Drehrichtung über die Betriebsstellung hinaus. Bei einem Verschwenken in der zweiten Drehrichtung löst sich hingegen die Verbindung des ersten Drehgelenks.

Bevorzugt ist der Tragarm und/oder der Spiegelkopf mit einer Trägerstruktur, beispielsweise aus Metall, ausgebildet. Wird diese mit einer Abdeckung, beispielsweise aus Kunststoff, umkleidet oder vorteilhaft, beispielsweise durch Umspritzen, in diese integriert, ergibt dies eine leichte, aerodynamisch günstige und gleichermaßen stabile und vibrationsarme Spiegelanordnung. Besonders bevorzugt kann das erste und/oder zweite Drehgelenk an diese Trägerstruktur angelenkt sein.

In einer weiteren vorteilhaften Ausführung umfasst der Tragarm einen ersten und einen zweiten Teil, wobei zwischen dem ersten und zweiten Tragarmteil ein drittes Drehgelenk angeordnet ist, dessen Drehachse sich bei montierter Spiegelanordnung im wesentlichen vertikal erstreckt. Dies gestattet ein Einschwenken der Spiegelanordnung seitlich an oder vor das Fahrzeug, so dass dessen Gesamtabmessung, insbesondere dessen Gesamtlänge, sich beispielsweise für eine Schiffsverladung, ein Parken oder ähnliches vorteilhaft reduziert. Dieses Einschwenken kann motorisch oder manuell erfolgen.

Der Spiegelkopf ist üblicherweise ein langgestrecktes Bauteil mit einem ersten Ende, das in montiertem Zustand und in Betriebsstellung zum Fahrzeug weist, und einem zweiten Ende, das in montiertem Zustand und in Betriebsstellung von dem Fahrzeug weg weist. Nach einer besonders vorteilhaften Ausgestaltung der Erfindung ist das erste oder das zweite Drehgelenk zwischen dem fahrzeugseitigen Ende und dem von dem Fahrzeug weg weisenden Ende des Spiegelkopfes an dem Spiegelkopf angeordnet. Hierdurch verringert sich der Raumbedarf beim Schwenken des Spiegelkopfes. Aufgrund dieser Anordnung der beiden Drehgelenke wirkt der Spiegelkopf bei einem Verschwenken in der ersten Drehrichtung A auch als Massenausgleich und prägt aufgrund der Gravitation ein Vorspanndrehmoment um die erste Drehachse auf, so dass ein Verschwenken in der ersten Drehrichtung bei konstruktiv gleichem ersten und zweiten Drehgelenken ein geringeres Auslösedrehmoment erfordert. Damit können erstes und zweites Drehgelenk vorteilhaft konstruktiv ähnlich ausgebildet werden, wobei das erste Drehgelenk bereits bei geringeren Drehmomenten, also sensibler, auslöst, während das zweite Drehgelenk höheren, insbesondere durch Windkräften induzierten, Drehmomenten widersteht.

Weitere Aufgaben, Vorteile und Merkmale ergeben sich aus den Unteransprüchen und den nachfolgend beschriebenen Ausführungen. Hierzu zeigt:
Fig. 1 ein Nutzfahrzeug mit einer Spiegelanordnung gemäß einer Ausführung der vorliegenden Erfindung;
Fig. 2 eine Spiegelanordnung gemäß einer Ausführung der vorliegenden Erfindung in der Seitenansicht in Betriebsstellung (durchgezogen) und zwei Ausweichstellungen (strichliert); und
Fign. 3A - 3C die Trägerstruktur der Spiegelanordnung in den in Fig. 2 abgebildeten Stellungen.

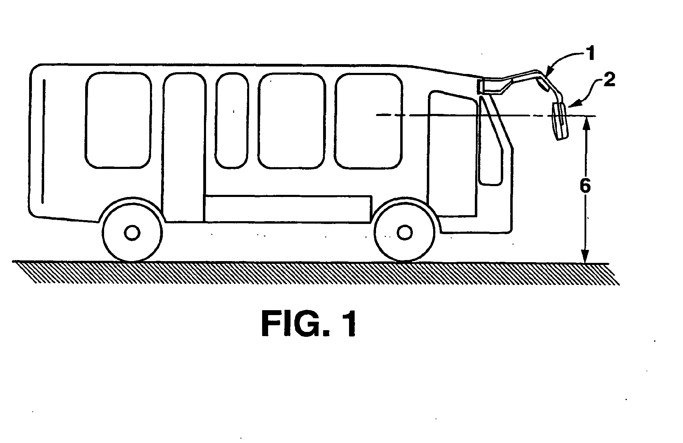

Wie in Fig. 1 gezeigt, kann eine Spiegelanordnung nach der vorliegenden Erfindung so am Fahrzeug angeordnet werden, dass ein Spiegelkopf 2 in einer nicht verschwenkten Betriebsstellung wenigstens teilweise in einen sich horizontal über der Aufstandsfläche des Fahrzeugs erstreckenden Sicherheitsbereich 6 hineinragt. Da der Spiegelkopf 2 erfindungsgemäß in eine Ausweichstellung oberhalb des Sicherheitsbereichs 6 verschwenkbar ist, wird auch bei einer Kollision mit einem Hindernis innerhalb des Sicherheitsbereiches 6 eine Beschädigung vermieden. Insbesondere eine Verletzung von Personen, die sich im Sicherheitsbereich 6 aufhalten, beispielsweise Buspassagiere, kann so verhindert werden.

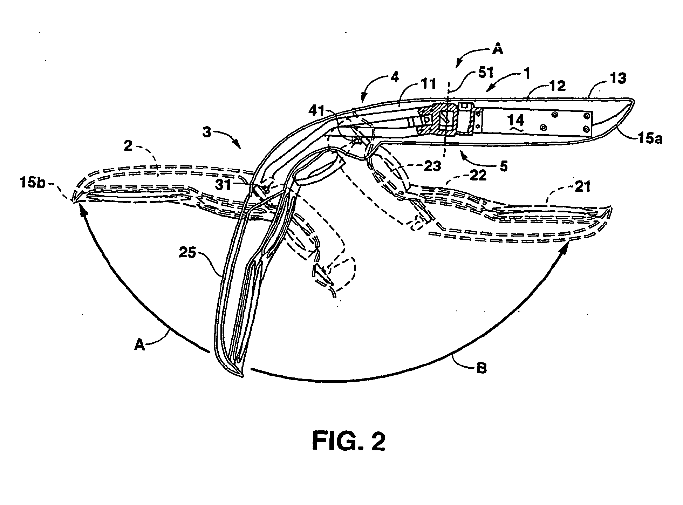

Fig. 2 zeigt eine Spiegelanordnung gemäß einer Ausführung der vorliegenden Erfindung in der Seitenansicht in einer Betriebsstellung (durchgezogen) und zwei Ausweichstellungen (strichliert). Die Spiegelanordnung umfasst einen Tragarm 1 und einen Spiegelkopf 2. Der Spiegekopf 2 ist um eine erste Drehachse 31 in einer ersten Drehrichtung A und um eine zweite Drehachse 41 in einer zweiten Drehrichtung B um ein erstes bzw. zweites Drehgelenk 3 bzw. 4 verschwenkbar.

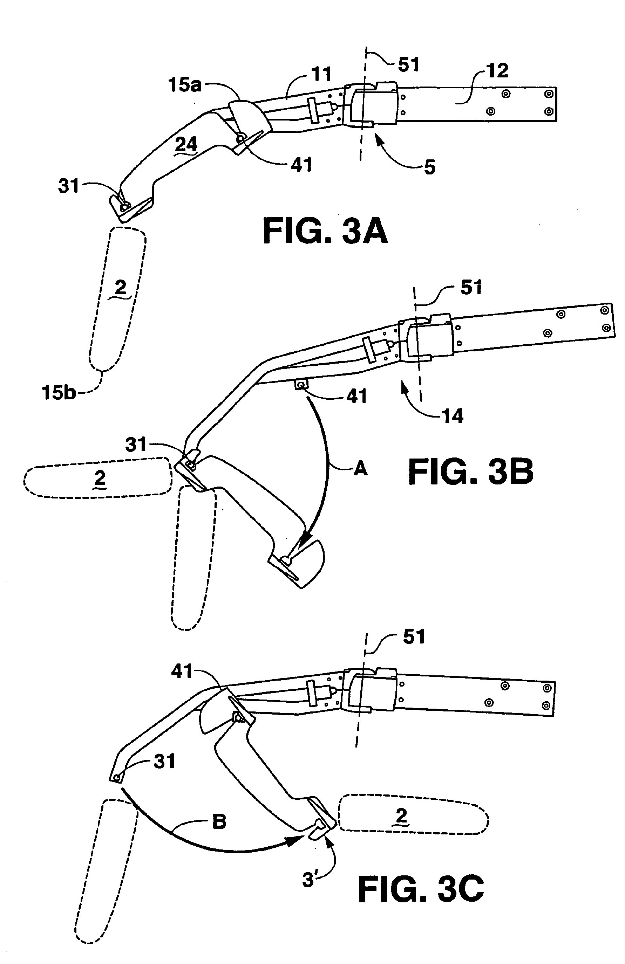

Der Tragarm 1 umfasst eine Trägerstruktur 14, bevorzugt aus Metall, und eine aerodynamische Verkleidung 13, bevorzugt aus Kunststoff. Er ist, wie insbesondere in Fig. 3A deutlich, zweiteilig ausgebildet, wobei das erste Teil 11 und das zweite Teil 12 mittels eines dritten Drehgelenks 5 verbunden sind, dessen Drehachse 51 sich bei montierter Spiegelanordnung im wesentlichen vertikal erstreckt und so ein Einschwenken der Spiegelanordnung seitlich an oder vor das Fahrzeug gestattet.

Der Spiegelkopf 2 umfasst ebenfalls eine Trägerstruktur 24, bevorzugt aus Metall, und eine aerodynamische Verkleidung 25, bevorzugt aus Kunststoff. Motorisch oder manuell verstellbar in dem Spiegelkopf 2 ist ein erster Spiegel 21, ein zweiter Spiegel 22 und ein dritter Spiegel 23 angeordnet, die als Hauptspiegel, als Weitwinkelspiegel bzw. als Totwinkelspiegel fungieren.

Wie am besten aus Fign. 3A - 3C erkennbar, sind Tragarm und Spiegelkopf über das erste und zweite Drehgelenk miteinander verbunden. Der besseren Übersichtlichkeit halber ist hier nur die Trägerstruktur 14 des Tragarms 1 und die Trägerstruktur 24 des Spiegelkopfes 2 dargestellt sowie der den ersten und zweiten Spiegel 21, 22 tragende Teil des Spiegelkopfes strichliert angedeutet und mit dem Bezugszeichen 2 bezeichnet.

Fig. 3A zeigt die Spiegelanordnung in ihrer Betriebsstellung. Dabei greift die Trägerstruktur 24 formschlüssig derart an den Drehachsen 31 und 41 des ersten und zweiten Drehgelenks 3, 4 an, dass sie daran einrastet und so sicher in der Betriebsstellung gehalten wird. Das Einrasten kann dabei reib-und/oder formschlüssig mittels Reibpaarungen, flexiblen Rastnasen oder dergleichen (nicht dargestellt) erfolgen. Bevorzugt erfolgt ein Einrasten durch das dargestellte formschlüssige Umgreifen der Drehachsen 31, 41 durch die Trägerstruktur 24 des Spiegelkopfes.

Die beiden Drehgelenke umfassen jeweils eine Drehfeder, beispielsweise eine entsprechend geformte Stahlfeder (nicht dargestellt), deren eines Ende fest mit der Tragstruktur 14 des Tragarms 1 verbunden ist und deren zweites Ende sich bei eingerastetem Spiegelkopf 2 an dessen Trägerstruktur 24 abstützt und so einem Verschwenken Widerstand entgegensetzt. Gleichermaßen kann die Feder auch fest mit der Trägerstruktur 24 des Spiegelkopfes 2 verbunden sein und sich bei eingerastetem Spiegelkopf 2 an der Trägerstruktur 14 des Tragarmes 1 abstützen.

Die beiden Drehfedern fixieren zusammen mit dem Einrasten den Spiegelkopf 2 in seiner Betriebsstellung. Da die Drehachse des jeweils anderen Drehgelenks ein Verschwenken entgegen der Drehrichtung als Anschlag verhindert, können die Drehgelenke 3, 4 durch die Drehfedern konstruktiv sehr einfach und robust ausgebildet sein. Insgesamt ergibt sich durch das Zusammenwirken der zwei Drehgelenke 3, 4, der Drehfedern, die einem Verschwenken in Drehrichtung Widerstand entgegensetzen, den als Anschlag fungierenden Drehachsen 31, 41, die ein Verschwenken entgegen der Drehrichtung verhindern, und das formschlüssige Umgreifen der Drehachsen 31, 41 eine konstruktiv einfache und sichere Fixierung des Spiegelkopfes 2 in der Betriebsstellung, die gleichwohl bei einer Kollision sicher gelöst werden kann und ein Ausweichen ermöglicht.

Wirkt durch eine Kollision mit einem Hindernis, beispielsweise beim Rückwärtsrangieren, eine ausreichend große Kraft nach vorne (in Fign. 3A-3C nach links, i.e. in Vorwärtsfahrtrichtung) auf den Spiegelkopf 2, so löst sich die Rastverbindung im zweiten Drehgelenk 4 und der Spiegelkopf 2 schwenkt um die erste Drehachse 31 in der ersten Drehrichtung A gegen den Widerstand der Drehfeder im ersten Drehgelenk, wie dies in Fig. 3B gezeigt ist. Die Drehfeder im ersten Drehgelenk 3 verhindert ein Verschwenken bei zu geringen Kräften und unterstützt so das Verrasten in der Betriebsstellung. Gleichzeitig bewirkt sie ein Rückstelldrehmoment um die erste Drehachse 31, die den Spiegelkopf 2 nach seiner Ausweichbewegung wieder, zumindest annähernd, in seine Betriebsstellung zurückführt.

Wirkt umgekehrt durch eine Kollision mit einem Hindernis, beispielsweise beim Anfahren einer Bushaltestelle, eine ausreichend große Kraft nach hinten (in Fign. 3A- 3C nach rechts, i.e. entgegen der Vorwärtsfahrtrichtung) auf den Spiegelkopf 2, so löst sich die Rastverbindung im ersten Drehgelenk 3 und der Spiegelkopf schwenkt um die zweite Drehachse 41 in der zweiten Drehrichtung B gegen den Widerstand der Drehfeder im zweiten Drehgelenk 4, wie dies in Fig. 3C gezeigt ist. Die Drehfeder im zweiten Drehgelenk 4 verhindert ein Verschwenken bei zu geringen Kräften und unterstützt so das Verrasten in der Betriebsstellung. Gleichzeitig bewirkt sie ein Rückstelldrehmoment um die zweite Drehachse 41, die den Spiegelkopf nach seiner Ausweichbewegung wieder, zumindest annähernd, in seine Betriebsstellung zurückführt

Bei den beschrieben Ausführungsformen der Erfindung ist der Spiegelkopf ein langgestrecktes Bauteil mit einem ersten Ende, das in montiertem Zustand und in Betriebsstellung zum Fahrzeug weist, und einem zweiten Ende, das in montiertem Zustand und in Betriebsstellung von dem Fahrzeug weg weist. Das erste Drehgelenk 3 ist an dem Spiegelkopf 2 zwischen dem ersten und dem zweiten Endes des Spiegelkopfes 2 angeordnet. Das zweite Drehgelenk 4 ist an dem zweiten Ende, dem fahrzeugseitigen Ende angebracht. Hierdurch verringert sich der Raumbedarf beim Schwenken des Spiegelkopfes 2. Aufgrund dieser Anordnung wirkt der Spiegelkopf 2 bzw. die Trägerstruktur 24 des Spiegelkopfes 2 bei einem Verschwenken in der ersten Drehrichtung A auch als Massenausgleich und prägt aufgrund der Gravitation ein Vorspanndrehmoment um die erste Drehachse 31 auf, so dass ein Verschwenken in der ersten Drehrichtung A bei konstruktiv gleichem ersten und zweiten Drehgelenken 3, 4 ein geringeres Auslösedrehmoment erfordert. Damit können erstes und zweites Drehgelenk 3, 4 vorteilhaft konstruktiv ähnlich ausgebildet werden, wobei das erste Drehgelenk 3 bereits bei geringeren Drehmomenten, also sensibler, auslöst, während das zweite Drehgelenk 4 noch höheren, insbesondere durch Windkräften induzierten, Drehmomenten widersteht.

Die Ausbildung lösbarer Befestigungen in den Drehgelenken 3, 4 selber ist durch den formschlüssigen Eingriff und die einseitig lösbare Abstützung der Federn kinematisch und konstruktiv sehr einfach. Alternativ kann jedoch auch der Spiegelkopf 2 zweiteilig ausgebildet sein, wobei beide Teile gemeinsam um das zweite Drehaches 41 und nur ein vorderer Teil um die erste Drehachse 31 verschwenkbar sind. Betrachtet man hierzu Fig. 3C, so würde in einem solchen Fall Bezugszeichen 2 den vordem Spiegelkopfteil, Bezugszeichen 24 den anderen Spiegelkopfteil bezeichnen. Beide Spiegelkopfteile wären gemeinsam um das in diesem Falle unlösbare zweite Drehgelenk 4 in Drehrichtung B verschwenkbar. Der vordere Teil 2 wäre zudem eigenständig um ein mit 3' bezeichnetes unlösbares erstes Drehgelenk verschwenkbar. Auch die kinematische Umkehrung, i.e. gemeinsames Verschwenken in erster Drehrichtung A und separates Verschwenken des vordem Teils in zweiter Drehrichtung B ist möglich.

## Patentansprüche

1. Spiegelanordnung, insbesondere für Nutzfahrzeuge, mit
einem Tragarm (1);
einem daran verschwenkbar gehaltenen Spiegelkopf (2); und
einem ersten Drehgelenk (3),
das zwischen Tragarm und Spiegelkopf angeordnet ist, und dessen Drehachse (31) sich bei montierter Spiegelanordnung im Wesentlichen horizontal und quer zur Fahrtrichtung erstreckt,
einem zweiten Drehgelenk (4),
das zwischen Tragarm und Spiegelkopf angeordnet ist, und dessen Drehachse (41) sich bei montierter Spiegelanordnung im Wesentlichen parallel zur Drehachse des ersten Drehgelenks erstreckt,
wobei das erste Drehgelenk ein Verschwenken des Spiegelkopfes um seine Drehachse (31) nur in einer ersten Drehrichtung (A) gestattet, und das zweite Drehgelenk ein Verschwenken des Spiegelkopfes um seine Drehachse (41) nur in einer zweiten, der ersten Drehrichtung entgegengesetzten, Drehrichtung (B) gestattet,
**dadurch gekennzeichnet,**
**dass** das erste und/oder zweite Drehgelenk einen Anschlag umfasst, der eine Drehung in die erste und/oder zweite Drehrichtung begrenzt, und
**dass** der Anschlag eines Drehgelenks von der Drehachse des jeweils anderen Drehgelenks gebildet wird.

2. Spiegelanordnung nach Anspruch 1, **dadurch gekennzeichnet, dass** der Tragarm (1) eine Trägerstruktur (14, 24) umfasst, an die das erste und zweite Drehgelenk angelenkt sind, oder dass der Tragarm (1) eine Trägerstruktur (14, 24) umfasst, an die das zweite Drehgelenk angelenkt ist und der Spiegelkopf (2) eine Trägerstruktur (14, 24) umfasst, an die das erste Drehgelenk angelenkt ist..

3. Spiegelanordnung nach einem der vorigen Ansprüche, **dadurch gekennzeichnet, dass** der Spiegelkopf (2) wenigstens einen ersten Spiegel (21), vorzugsweise zusätzlich einen zweiten Spiegel (22), besonders bevorzugt zusätzliche einen dritten Spiegel (23) umfasst.

4. Spiegelanordnung nach einem der vorigen Ansprüche, **dadurch gekennzeichnet, dass** das erste und/oder zweite Drehgelenk eine Feder, insbesondere eine Drehfeder umfasst.

5. Spiegelanordnung nach einem der vorhergehenden Ansprüche, **dadurch gekennzeichnet, dass** nur im ersten oder im ersten und im zweiten Drehgelenk bei einem Verschwenken des Spiegelkopfes (2) um die Drehachse des jeweils anderen Drehgelenks die Verbindung zwischen Spiegelkopf und Tragarm lösbar ist.

6. Spiegelanordnung nach einem der vorigen Ansprüche, **dadurch gekennzeichnet, dass** der Tragarm (1) einen ersten und einen zweiten Teil (11,12) umfasst, wobei zwischen dem ersten und zweiten Tragarmteil ein drittes Drehgelenk (5) angeordnet ist, dessen Drehachse (51) sich bei montierter Spiegelanordnung im Wesentlichen vertikal erstreckt.

7. Spiegelanordnung nach einem der vorhergehenden Ansprüche, **dadurch gekennzeichnet, dass** der Spiegelkopf (2) ein erstes Ende aufweist, das in montiertem Zustand und in einer nicht verschwenkten Betriebsstellung des Spiegelkopfes (2) in Richtung Fahrzeug weist, und ein zweites Ende aufweist, dass in montiertem Zustand und in einer nicht verschwenkten Betriebsstellung des Spiegelkopfes (2) von dem Fahrzeug wegweist, und dass das erste Drehgelenk (3) an dem Spiegelkopf (2) zwischen den beiden Enden des Spiegelkopfes (2) angeordnet sind.

8. Spiegelanordnung nach Anspruch 7, **dadurch gekennzeichnet, dass** das zweite Drehgelenk (4) an dem in einer nicht verschwenkten Betriebsstellung des Spiegelkopfes (2) in Richtung Fahrzeug weisenden Ende des Spiegelkopfes (2) angeordnet ist.

9. Nutzfahrzeug, insbesondere Personenbus, mit einer Spiegelanordnung nach einem der vorigen Ansprüche, wobei die Spiegelanordnung so am Fahrzeug angeordnet ist, dass der Spiegelkopf (2) in einer nicht verschwenkten Betriebsstellung wenigstens teilweise in einen sich horizontal über der Aufstandsfläche des Fahrzeugs erstreckenden Sicherheitsbereich (6) hineinragt und um die erste und/oder zweite Drehachse (31, 41) in eine Ausweichstellung oberhalb des Sicherheitsbereichs verschwenkbar ist.

## Claims

1. A mirror arrangement, in particular for commercial vehicles, comprising
a support arm (1),
a mirror head (2) pivotally retained thereon; and
a first hinge (3)
disposed between support arm and mirror head, the axis of rotation (31) of which extends in the mounted mirror arrangement essentially horizontally and transversely to the direction of travel,
a second hinge (4)
disposed between support arm and mirror head, the axis of rotation (41) of which extends in the mounted mirror arrangement essentially in parallel with the axis of rotation of the first hinge,
wherein the first hinge allows pivoting of the mirror head about its axis of rotation (41) only in one direction of rotation (A), and the second hinge allows pivoting of the mirror head about its axis of rotation (41) only in a second direction (B) of rotation which is opposite to the first direction (A) of rotation,
**characterized in that**
the first and/or second hinge (3, 4) includes a stop limiting a rotation in the first and/or second direction (A, B) of rotation, and
**in that** the stop of a hinge is constituted by the axis of rotation of the respective other hinge.

2. The mirror arrangement according to claim 1, **characterized in that** the support arm (1) includes a carrier structure (14, 24) to which the first and second hinges are linked, or **in that** the support arm (1) includes a carrier structure (14, 24) to which the second hinge is linked, and the mirror head (2) includes a carrier structure (14, 24) to which the first hinge is linked.

3. The mirror arrangement according to any one of the preceding claims, **characterized in that** the mirror head (2) includes at least a first mirror (21), preferably in addition a second mirror (22), and in a particularly preferred manner in addition a third mirror (23).

4. The mirror arrangement according to any one of the preceding claims, **characterized in that** the first and/or second hinge includes a spring, in particular is a torsion spring.

5. The mirror arrangement according to any one of the preceding claims, **characterized in that** in only in the first hinge, or in the first and second hinges, upon a rotation of the mirror head (2) about the axis of rotation of the respective other hinge, the coupling between mirror head and support arm is releasable.

6. The mirror arrangement according to any one of the preceding claims, **characterized in that** the support arm (1) includes a first and a second part (11, 12), wherein between the first and the second support arm part a third hinge (5) is disposed, the axis of rotation (51) of which extends essentially vertically in the mounted mirror arrangement.

7. The mirror arrangement according to any one of the preceding claims, **characterized in that** the mirror head (2) has a first end pointing towards the vehicle in the mounted condition and in a non-pivoted operating position of the mirror head (2), and a second end pointing away from the vehicle in the mounted condition and in a non-pivoted operating position of the mirror head (2), and **in that** the first hinge (3) is disposed on the mirror head (2) between the two ends of the mirror head (2).

8. The mirror arrangement according to claim 7, **characterized in that** the second hinge (4) is disposed on the one end of the mirror head (2) which points towards the vehicle in a non-pivoted operating position of the mirror head (2)..

9. A utility vehicle, in particular a passenger bus, comprising a mirror arrangement according to any one of the preceding claims, wherein the mirror arrangement is disposed on the vehicle such that the mirror head (2), when in a non-pivoted operational position, projects at least partially into a safety zone (6) extending horizontally over the vehicle's base area, and is adapted to be pivoted about the first and/or second axis of rotation (31, 41) into a retracted position above the safety zone.

## Revendications

1. Un agencement de miroirs, en particulier pour des véhicules utilitaires, comprenant un bras support (1) ;
une tête de miroir (2) maintenue à pivotement sur celui-ci ; et
une première articulation tournante (3),
disposée entre bras support et tête de miroir, et dont l'axe de rotation (31) lorsque l'agencement de miroirs est monté, s'étend sensiblement horizontalement et transversalement par rapport à la direction de roulage,
une deuxième articulation tournante (4),
disposée entre bras support et tête de miroir, et dont l'axe de rotation (41) lorsque l'agencement de miroirs est monté, s'étend sensiblement parallèlement à l'axe de rotation de la première articulation tournante,
la première articulation tournante permettant un pivotement de la tête de miroir autour de son axe de rotation (31), uniquement dans un premier sens de rotation (A), et la deuxième articulation tournante permettant un pivotement de la tête de miroir autour de son axe de rotation (41), uniquement dans un deuxième sens de rotation (B), opposé au premier sens de rotation,
**caractérisé en ce que** le premier et/ou la deuxième articulation tournante comprend/comprennent une butée limitant une rotation dans le premier et/ou le deuxième sens de rotation, et **en ce que** la butée d'une articulation tournante est formée par l'axe de rotation chaque fois de l'autre articulation tournante.

2. Agencement de miroirs selon la revendication 1, **caractérisé en ce que** le bras support (1) comprend une structure support (14, 24) sur laquelle sont articulées la première et la deuxième articulations tournantes, ou **en ce que** le bras support (1) comprend une structure support (14, 24) à laquelle est articulée la deuxième articulation tournante, et la tête de miroir (2) comprend une structure support (14, 24) à laquelle est articulée la première articulation tournante.

3. Agencement de miroirs selon l'une des revendications précédentes, **caractérisé en ce que** la tête de miroir (2) comprend au moins un premier miroir (21), de préférence en plus un deuxième miroir (22), de façon particulièrement préférée, en plus, un troisième miroir (23).

4. Agencement de miroirs selon l'une des revendications précédentes, **caractérisé en ce que** la première et/ou la deuxième articulation tournante comprend un ressort, en particulier un ressort de torsion.

5. Agencement de miroirs selon l'une des revendications précédentes, **caractérisé en ce que**, uniquement dans la première, ou dans la première et la deuxième articulations tournantes, lors d'un pivotement de la tête de miroir (2) autour de l'axe de rotation de chaque fois l'autre articulation tournante, la liaison entre tête de miroir et bras support est désolidarisable.

6. Agencement de miroirs selon l'une des revendications précédentes, **caractérisé en ce que** le bras support (1) comprend une première et une deuxième parties (11, 12), sachant qu'entre la première et la deuxième parties de bras support est disposée une troisième articulation tournante (5), dont l'axe de rotation (51) s'étend sensiblement verticalement lorsque l'agencement de miroir est monté.

7. Agencement de miroirs selon l'une des revendications précédentes, **caractérisé en ce que** la tête de miroir (2) présente une première extrémité qui, à l'état monté et en une position de fonctionnement non pivotée de la tête de miroir (2), est tournée dans la direction du véhicule, et présente une deuxième extrémité qui, à l'état monté et en une position de fonctionnement non pivotée de la tête de miroir (2), s'écarte du véhicule, et **en ce que** la première articulation tournante (3) est disposée sur la tête de miroir (2), entre les deux extrémités de la tête de miroir (2).

8. Agencement de miroirs selon la revendication 7, **caractérisé en ce que** la deuxième articulation tournante (4) est disposée sur l'extrémité qui, en une position de fonctionnement non pivotée de la tête de miroir (2), est tournée dans la direction du véhicule, de la tête de miroir (2).

9. Véhicules utilitaires, en particulier autobus pour passagers, avec un agencement de miroirs selon l'une des revendications précédentes, l'agencement de miroirs étant disposé sur le véhicule de manière que la tête de miroir (2), en une position de fonctionnement non pivotée, pénètre au moins partiellement dans une zone de sécurité (6) s'étendant horizontalement sur la surface de pose du véhicule et est susceptible de pivoter autour du premier et/ou du deuxième axe de rotation (31, 41), en une position d'échappement au-dessus de la zone de sécurité.
